(19) Europäisches Patentamt
European Patent Office
Office européen des brevets

(11) **EP 3 708 363 A1**

(12) **EUROPEAN PATENT APPLICATION**
published in accordance with Art. 153(4) EPC

(43) Date of publication:
**16.09.2020 Bulletin 2020/38**

(51) Int Cl.:
**B32B 27/32** [(2006.01)]     **B32B 5/18** [(2006.01)]
**C08J 9/26** [(2006.01)]      **H01M 2/16** [(2006.01)]

(21) Application number: **18877188.5**

(22) Date of filing: **29.10.2018**

(86) International application number:
**PCT/JP2018/040199**

(87) International publication number:
**WO 2019/093184 (16.05.2019 Gazette 2019/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.11.2017 JP 2017215259**

(71) Applicant: **Toray Industries, Inc.**
**Tokyo 103-8666 (JP)**

(72) Inventors:
• **NAKAJIMA Konomi**
  **Nasushiobara-shi**
  **Tochigi 329-2763 (JP)**
• **HARUMOTO Kosuke**
  **Nasushiobara-shi**
  **Tochigi 329-2763 (JP)**
• **MATSUSHITA Katsuhiko**
  **Nasushiobara-shi**
  **Tochigi 329-2763 (JP)**
• **LI Dan**
  **Nasushiobara-shi**
  **Tochigi 329-2763 (JP)**

(74) Representative: **Mewburn Ellis LLP**
**Aurora Building**
**Counterslip**
**Bristol BS1 6BX (GB)**

(54) **POLYOLEFIN COMPOSITE POROUS FILM, METHOD FOR PRODUCING SAME, BATTERY SEPARATOR, AND BATTERY**

(57)     Provided is a polyolefin composite porous film that makes it possible to improve impact resistance in addition to improving battery characteristics such as external short circuit resistance and high-temperature heat resistance in recent battery designs having high energy density. The polyolefin composite porous film comprises: a first layer containing polypropylene (A), a first high-density polyethylene (B) having a melting point of 130°C or more, and a second high-density polyethylene (C) having a melting point of 120°C or more and less than 130°C; and a second layer containing polyethylene (D). The first layer and the second layer are laminated together in an integrated manner.

FIG. 1

**Description**

Technical Field

The present invention relates to a polyolefin composite porous membrane, its product method, a battery separator, and a battery.

Background Art

A polyolefin porous membrane is widely used as a separator for a battery and is particularly preferably used as a separator for a lithium ion secondary battery.

A lithium ion secondary battery enables high performance and longtime operation of electronic equipment such as a mobile phone and a notebook computer, as a high capacity battery that can be charged and discharged repeatedly. Recently, the lithium ion secondary battery is mounted as a driving battery of an environment friendly vehicle such as an electric automobile and a hybrid electric automobile, and further improvement in performance is expected.

Specifically, impact resistance is also required in addition to battery characteristics such as external short circuit resistance and high-temperature heat resistance.

The battery separator has an insulating property for preventing short circuit of both electrodes in such a battery, and has ion permeability by holding an electrolytic solution in pores thereof. Thus, the battery separator plays an important role in safety of a battery and battery characteristics (for example, capacity, output characteristics, and cycle characteristics) and the like.

In order to use the polyolefin porous membrane as such a battery separator, the polyolefin porous membrane is required to have excellent ion permeability, impedance characteristics, and mechanical characteristics, and various porous membranes have been proposed. The polyolefin porous membrane used for a separator is also required to have a shutdown function of preventing rise in temperature of a lithium ion secondary battery. The shutdown function refers to a function of stopping a battery reaction by closing the pores since the polyolefin constituting the separator melts when a high temperature is reached, and in recent high energy density designs, lower temperature shutdown characteristics are required. The polyolefin porous membrane used for the separator is also required to have a meltdown characteristic in addition to the shutdown function. The meltdown characteristic refers to a molten shape retaining property by which short circuit between the electrodes due to melting of the separator can be prevented even when the temperature in the battery is further increased after the shutdown.

Patent Document 1 describes a polyolefin multilayer microporous membrane in which a first microporous layer containing a polypropylene and a second microporous layer containing an ultrahigh molecular weight polyethylene are laminated.

Patent Document 2 describes a polyolefin microporous membrane which is obtained by laminating and integrating a microporous membrane A containing, as essential components, an ultrahigh molecular weight polyethylene and polypropylene, or ultrahigh molecular weight polyethylene, high-density polyethylene and polypropylene, and a polyethylene microporous membrane B containing at least linear low density polyethylene.

Patent Document 3 describes a polyolefin microporous membrane containing (A) an ultrahigh molecular weight polyethylene having a weight average molecular weight of 500,000 or more, or a composition including an ultrahigh molecular weight polyethylene having a weight average molecular weight of 500,000 or more and a polyethylene having a weight average molecular weight of 10,000 or more and less than 500,000, (B) a substantially linear ethylene-$\alpha$-olefin copolymer produced using a single-site catalyst and having a melting point of 95°C to 125°C, and (C) a polypropylene.

Patent Document 4 describes a polyolefin multilayer microporous membrane in which a second porous layer containing a polyethylene-based resin and polypropylene is placed between first porous layers made of a polyethylene-based resin.

Citation List

Patent Document

Patent Document 1: WO 2015/194667 A1
Patent Document 2: Japanese Patent No. 4931163
Patent Document 3: Japanese Patent No. 4280371
Patent Document 4: Japanese Patent No. 5202949
Patent Document 5: Japanese Patent No. 4641706

Patent Document 6: Japanese Patent No. 5046640

## Summary of Invention

Technical Problem

In Patent Document 1, a shutdown function is not mentioned, and a raw material, a production method, and the like that contribute to the low temperature shutdown function are not described.

In Patent Document 2, the microporous membrane A contains polypropylene and the microporous membrane B contains the linear low density polyethylene, and it is impossible to avoid low strength as a whole because they inhibit high strength.

In Patent Document 3, the ultrahigh molecular weight polyethylene is an essential component, and thus a non-uniform fibril structure is formed during stretching, and the preparation is made by melting during heat fixing until immediately before shutdown. Therefore, the air permeability value is very high, the puncture strength is low, and a thin membrane, a low air permeability value and a high strength, which are required designs in recent years, cannot be obtained.

Patent Document 4 also aims at a high-temperature meltdown function similarly to Patent Document 1, and has not yet led to a design for achieving both the high-temperature meltdown and reduction in shutdown temperature. In Patent Documents 5 and 6, the multilayer microporous membrane is not evaluated.

In summary, in the related art heretofore described, it is difficult to achieve the strength of the level required in recent years while satisfying both the shutdown characteristic and the meltdown characteristic. Therefore, an object of the present invention is to provide a polyolefin composite porous membrane, which can improve impact resistance in addition to battery characteristics such as external short circuit resistance and high-temperature heat resistance, a battery separator, and a battery using the battery separator.

Solution to Problem

That is, the present invention provides a polyolefin composite porous membrane, comprising:

a first layer containing a polypropylene (A), a first high-density polyethylene (B) having a melting point of 130°C or higher, and a second high-density polyethylene (C) having a melting point of 120°C or higher and lower than 130°C; and
a second layer containing a polyethylene (D),
wherein the first layer and the second layer are integrally laminated with each other.

In addition, the present invention provides a polyolefin composite porous membrane, having:

a shutdown temperature (SDT) of 120°C to 134°C;
a meltdown temperature (MDT) of 160°C or higher: and
a puncture strength converted at a thickness of 12 $\mu$m and a porosity of 50% being 270 cN or more.

In addition, the present invention provides a battery separator using the polyolefin composite porous membrane in the present invention.

In addition, the present invention provides a battery comprising a positive electrode, a negative electrode, and the battery separator in the present invention disposed between the positive electrode and the negative electrode.

In addition, the present invention provides a method for producing a polyolefin composite porous membrane, comprising:

a step of laminating, in a molten state, a first solution which contains a solvent and a first resin material containing a polypropylene (A), a first high-density polyethylene (B) having a melting point of 130°C or higher, and a second high-density polyethylene (C) having a melting point of 120°C or higher and lower than 130°C, and a second solution which contains a solvent and a second resin material containing a polyethylene (D); and
a step of stretching the obtained laminated body to form a stretch formed product.

Advantageous Effects of Invention

The present invention can provide a polyolefin composite porous membrane, which is capable of improving impact resistance in addition to battery characteristics such as external short circuit resistance and high-temperature heat resistance, and a method for producing the polyolefin composite porous membrane, a battery separator, and a battery using the battery separator.

Brief Description of Drawings

FIG. 1 is a SEM image of a polyolefin composite porous membrane in Example.
FIG. 2 is a SEM image of a porous membrane in Comparative Example.

Description of Embodiments

A polyolefin composite porous membrane in the present embodiment is a composite porous membrane which includes: a first layer containing a polypropylene (A), a first high-density polyethylene (B) having a melting point of 130°C or higher, and a second high-density polyethylene (C) having a melting point of 120°C or higher and lower than 130°C; and a second layer containing a polyethylene (D), in which the first layer and the second layer are integrally laminated with each other. The term "high-density polyethylene" may be referred to as "HDPE".

The first layer mainly contributes to the shutdown characteristic and the meltdown characteristic and can serve as a functional layer. In addition, the second layer mainly contributes to the strength and can serve as a base layer or a core layer. In the case where the polyolefin composite porous membrane is used as a separator of a battery, it is preferable that the first layer is disposed on both sides of a surface layer, and the second layer (core layer) is disposed between the first layers.

The second layer preferably contains, as the polyethylene (D), an ultrahigh molecular weight polyethylene having a weight average molecular weight (or "mass average molecular weight", Mw) of 1,000,000 or more. As a result, the strength of the membrane can be increased. A content of the ultrahigh molecular weight polyethylene in the second layer is preferably in a range of 2 mass% to 45 mass%. As the resin component constituting the second layer other than the ultrahigh molecular weight polyethylene, a high-density polyethylene is preferred. The second layer may be formed of the above-described ultrahigh molecular weight polyethylene and high-density polyethylene. As the high-density polyethylene, a high-density polyethylene having a melting point of 120°C or higher and lower than 130°C is preferred. This high-density polyethylene may be the same as the second high-density polyethylene (C) used for the first layer. The term "ultrahigh molecular weight polyethylene" may be referred to as "UHMwPE".

The ratio of a thickness of the second layer relative to the thickness of the entire polyolefin composite porous membrane is preferably in a range of 60% to 95%. In the case where the thickness of the second layer is 60% or more relative to the thickness of the entire membrane, the sufficient strength can be obtained. In the case where the thickness of the second layer is 95% or less relative to the thickness of the entire membrane, a thickness of the first layer can be ensured while having sufficient membrane strength, and the excellent shutdown characteristic and meltdown characteristic can be obtained.

In the first layer, the polypropylene (A) can contribute to the meltdown characteristic, the first high-density polyethylene (B) having a melting point of 130°C or higher can form a skeleton structure as a base polymer, and the second high-density polyethylene (C) having a melting point of 120°C or higher and lower than 130°C can contribute to the shutdown characteristic. Namely, fibrils of the first high-density polyethylene (B) form skeleton structures constituting the first layer, and the second high-density polyethylene (C) is melted to fill a gap between the skeleton structures when the first layer is exposed to a high temperature, specifically to a temperature equal to or higher than a shutdown temperature, so that shutdown in the first layer occurs. Thereafter, when the first layer is exposed to a higher temperature, specifically to a temperature approximating the melting point of first high-density polyethylene, the above-described skeleton structures tend to melt. However, the structures are maintained by the polypropylene (A), and thus, meltdown is prevented. When the first layer is exposed to a further higher temperature, specifically to a temperature approximating the melting point of the polypropylene, the polypropylene (A) for supporting the skeleton structures is melted, causing the meltdown.

The kinds and a mixing proportion of the three kinds of resins, which have functions different from one another, i.e., formation of a skeleton, exhibition of the shutdown, and prevention of the meltdown, are optimized such that the three kinds of resins play a sufficient role and do not interfere with each other, and a production method is studied so as to allow these three resins to coexist in one layer. Thus, the present invention has been accomplished.

It is preferable that in the first layer, a content of the polypropylene (A) is in a range of 5 mass% to 30 mass%, a content of the first high-density polyethylene (B) is in a range of 30 mass% to 75 mass%, and a content of the second high-density polyethylene (C) is in a range of 20 mass% to 45 mass%.

The second high-density polyethylene (C) having a low melting point is preferably an ethylene-$\alpha$-olefin copolymer from the viewpoint of mechanical characteristics, formation of fibrils, and no inhibition of the shutdown or meltdown characteristic owing to uniform dispersion, and preferably contains an ethylene-butene copolymer as the ethylene-$\alpha$-olefin copolymer. In the case where the number of carbon atoms of the $\alpha$-olefin is large, it is difficult to form fibrils due to low degree of crystallization, and in the case where the number of carbon atoms is small, the shutdown temperature may rise, and thus, the $\alpha$-olefin is preferably 1-butene. The proportion of the ethylene-butene copolymer in the second high-density polyethylene (C) having a low melting point is preferably 90 mass% or more, and more preferably 95 mass% or more. It is further preferable that the second high-density polyethylene (C) is an ethylene-butene copolymer.

It is preferable that the polyolefin composite porous membrane in the present embodiment has a shutdown temperature (SDT) of 120°C to 134°C and a meltdown temperature (MDT) of 160°C or higher. At this time, the puncture strength converted at a thickness of 12 $\mu$m and a porosity of 50% is preferably 270 cN or more.

In the case where the SDT of the polyolefin composite porous membrane is lower than 120°C, the SDT overlaps with a general stretching temperature range and the pores are closed during stretching in the production, resulting in a microporous membrane having a non-uniform structure.

In the case where the SDT of the polyolefin composite porous membrane is higher than 134°C, a battery using such polyolefin composite porous membrane as a separator dose not sufficiently exhibit the shutdown function in a low temperature range, and the safety of the battery decreases.

In the case where the puncture strength of the polyolefin composite porous membrane, converted at a thickness of 12 $\mu$m and a porosity of 50%, is less than 270 cN, a battery using the thinned polyolefin composite porous membrane as a separator becomes weak against external impact and the separator is likely to be broken, so that a short circuit due to electrode contact is likely to occur.

It is preferable that the polyolefin composite porous membrane in the present embodiment has a porosity of 30% or more. Further, it is preferable that an average flow pore diameter measured by a palm porometer is in a range of 20 nm to 40 nm, and the maximum flow pore diameter measured by a palm porometer is preferably 70 nm or less.

In the case where the porosity of the polyolefin composite porous membrane is 30% or more and the polyolefin composite porous membrane is used as a separator of a battery, ions can penetrate the separator sufficiently, and an increase in electrical resistance, a decrease in output characteristics, and deterioration of cycle characteristics can be prevented.

In the case where the average flow pore diameter measured by the palm porometer is 20 nm or more, ions can penetrate the separator sufficiently, and an increase in the electrical resistance and deterioration of the charging/discharging characteristics can be prevented.

In the case where the average flow pore diameter measured by the palm porometer is 40 nm or less, a bias is less likely to occur in a penetration path of ions, and generation of local dendrites and deterioration of cycle characteristics due to a micro short circuit can be prevented.

In the case where the maximum flow pore diameter measured by the palm porometer is 70 nm or less, a bias is less likely to occur in the penetration path of ions, and generation of local dendrites and deterioration of cycle characteristics due to a micro short circuit can be prevented. In addition, the safety of the battery can be ensured since it means that there is no large hole.

A method for producing the polyolefin composite porous membrane in the present embodiment includes: a step of laminating, in a molten state, a first resin material containing a polypropylene (A), a first high-density polyethylene (B) having a melting point of 130°C or higher, and a second high-density polyethylene (C) having a melting point of 120°C or higher and lower than 130°C and a second resin material containing a polyethylene (D); and a step of stretching the obtained laminated body to form a stretch formed product.

A layer of the first resin material and a layer of the second resin material are laminated in the molten state, so that fibrils are interlaced between the layers to prevent separation at an interface. Therefore, an increase in electrical resistance, accumulation of by-products from decomposition of the electrolytic solution, and the like can be prevented.

In the case where a resin material containing a plurality of resin components is stretched in a single layer state to prepare a microporous membrane, variations in a stretching ratio are likely to occur locally. As a result, as is clear from a SEM (scanning electron microscope) image in Comparative Example described below, a very uneven microporous membrane, which is partially fibrillated and is not fibrillated in the other part, tends to be formed. In the present invention, the layer of the first resin material and the layer of the second resin material are stretched in a laminated state, so that uniform stretching stress can be propagated between layers, and a uniform fibril structure can be formed stably. Particularly in the case where the second resin material contains an ultrahigh molecular weight polyethylene, in the stretching under this laminated state, stress is concentrated on a relatively hard layer of the second resin material, and the layer of the first resin material is stretched following the layer of the second resin material. As a result, a uniform fibril structure is likely to be formed. As shown in Examples and Comparative Examples described below, porous structures of obtained membranes are significantly different depending on presence or absence of the second layer.

In the case where the ultrahigh molecular weight polyethylene is added to the first resin material, the ultrahigh molecular weight polyethylene is hardly mixed with the first resin material due to its extremely low compatibility with each of the resin components A, B, and C contained in the first resin material. As a result, the uniformity of the formed membrane deteriorates, and the production step becomes unstable and quality variations tend to occur. From this viewpoint, it is preferable that the ultrahigh molecular weight polyethylene having low compatibility with the resins contained in the first layer is not contained in the first layer but is contained in the second layer.

Hereinafter, embodiments of the present invention are further described in detail.

(Polypropylene (A))

The kinds of the polypropylene (A) contained in the first layer is not particularly limited, and any of a propylene homopolymer, a copolymer of propylene with other $\alpha$-olefins and/or diolefins (propylene copolymer), or a mixture of two or more kinds selected from these polymers may be used. From the viewpoint of mechanical strength and miniaturization of a through-hole diameter, at least the propylene homopolymer is preferably used as a main component (70 mass% or more, preferably 80 mass% or more, and more preferably 90 mass% or more of polypropylene components), and the propylene homopolymer is more preferably used alone.

Both random copolymers and block copolymers can be used as the propylene copolymer. As $\alpha$-olefins in the propylene copolymer $\alpha$-olefins having 8 or less carbon atoms are preferred. Examples of the $\alpha$-olefins having 8 or less carbon atoms include ethylene, butene-1, pentene-1,4-methylpentene-1, octene-1, vinyl acetate, methyl methacrylate, styrene, and combinations thereof. As diolefins of the propylene copolymer, diolefins having 4 to 14 carbon atoms are preferred. Examples of the diolefin having 4 to 14 carbon atoms include butadiene, 1,5-hexadiene, 1,7-octadiene, 1,9-decadiene, and the like.

A content of other $\alpha$-olefins and diolefins in the propylene copolymer is preferably less than 10 mol% based on 100 mol% of the propylene copolymer.

(Weight average molecular weight and molecular weight distribution)

The weight average molecular weight (Mw) of polypropylene is preferably $6 \times 10^5$ or more, more preferably $8 \times 10^5$ or more, and still more preferably $1 \times 10^6$ to $4 \times 10^6$. This is because, in the case where the Mw of polypropylene is within the above-described range, strength, air permeability and the meltdown characteristic of the polyolefin composite porous membrane in the present embodiment are good. In addition, a content of polypropylene having Mw of $5 \times 10^4$ or less is preferably 5 mass% or less relative to 100 mass% of the polypropylene contained in the first microporous layer.

The molecular weight distribution of polypropylene (Mw/Mn) is preferably 1.01 to 100, more preferably 1.1 to 50, and still more preferably 2.0 to 20. This is because, in the case where the molecular weight distribution of polypropylene is within the above-described range, strength, air permeability and the meltdown characteristic of the polyolefin composite porous membrane in the present embodiment are good. Mw, Mw/Mn, and the like are values measured by a GPC method described below.

(Melting point and melting heat)

The melting point of the polypropylene is preferably 155°C to 170°C, and more preferably 160°C to 165°C, from the viewpoint of improving the meltdown characteristic.

The melting heat $\Delta$Hm of the polypropylene is preferably 90 J/g or more, more preferably 100 J/g or more, and still more preferably 110 J/g or more, from the viewpoint of improving the meltdown characteristic and the permeability.

The melting point and the melting heat are values measured by a scanning differential calorimeter (DSC) in accordance with JIS K7121.

(High-density polyethylene (B) and high-density polyethylene (C))

The polyethylene contained in the first layer contains the first high-density polyethylene (B) having a melting point of 130°C or higher and the second high-density polyethylene (C) having a melting point of 120°C or higher and lower than 130°C.

Examples of kinds of the polyethylene include a high-density polyethylene having a density of more than 0.94 g/cm$^3$, a medium-density polyethylene having a density of 0.93 g/cm$^3$ to 0.94 g/cm$^3$, a low density polyethylene having a density of less than 0.93 g/cm$^3$, and a linear low density polyethylene, and the polyethylene contained in the first layer is preferably the high-density polyethylene other than an ultrahigh molecular weight polyethylene (having Mw of 1,000,000 or more) from the viewpoint of the strength improvement by the uniformity of a fibril formation process in the presence of polypropylene and the shutdown characteristic and meltdown characteristic based on the dispersibility of each component.

The first high-density polyethylene (B) having a melting point of 130°C or higher is preferably a homopolymer of polyethylene, but may contain a small amount of $\alpha$-olefin component in order to impart flexibility in a formation process of a raw material and a stretching step of the porous membrane. The melting point of the high-density polyethylene (B) is preferably 130°C or higher, more preferably 132°C to 138°C, and still more preferably 133°C to 136°C. Further, the weight average molecular weight (Mw) is preferably $1 \times 10^5$ or more and less than $1 \times 10^6$, more preferably $1.5 \times 10^5$ to $9 \times 10^5$, and still more preferably $2 \times 10^5$ to $8 \times 10^5$. In the case where the high-density polyethylene (B) is within the above range, an appearance of the polyolefin composite porous membrane of the present embodiment is improved, and not only the through-hole diameter can be reduced, but also the shutdown characteristic and the meltdown characteristic are improved without inhibiting the dispersibility with the polypropylene (A) and the high-density polyethylene (C).

As the second high-density polyethylene (C) having a melting point of 120°C or higher and lower than 130°C, an ethylene-α-olefin copolymer is preferred. Examples of the ethylene-α-olefin copolymer include ethylene copolymers containing a small amount of other α-olefins such as propylene, 1-butene, 1-hexene, 1-pentene, 4-methyl-1-pentene, 1-octene, vinyl acetate, methyl methacrylate, or styrene. Among these copolymers, an ethylene-butene copolymer is particularly preferred. As such copolymers, a copolymer produced by a single-site catalyst is preferred. The melting point of the high-density polyethylene (C) is preferably 120°C or higher and lower than 130°C, more preferably 121°C to 129°C, and still more preferably 123°C to 128°C. The density of the high-density polyethylene (C) is 0.94 g/cm$^3$ or more, more preferably 0.945 g/cm$^3$ or more, and more preferably 0.946 to 0.955 g/cm$^3$. The melting point and density of the above-described second high-density polyethylene (C) are within the above range, so that the second high-density polyethylene (C) is uniformly dispersed with the high-density polyethylene (B) and the polypropylene (A), which coexist with the second high-density polyethylene (C) in the first layer, thereby exhibiting the shutdown characteristic and the meltdown characteristic. In addition, in order to propagate uniform stress during stretching, a melt flow rate of the second high-density polyethylene (C) is preferably 50 g/10 min to 200 g/10 min, more preferably 80 g/10 min to 170 g/10 min, and still more preferably 100 g/10 min to 150 g/10 min, and the melt flow rate is not particularly limited as long as the fibrils are uniformly formed and the characteristics of the present application are not inhibited.

[Composition of first layer]

It is preferable that in the first layer, a content of the polypropylene (A) is in a range of 5 mass% to 30 mass%, a content of the first high-density polyethylene (B) is in a range of 30 mass% to 75 mass%, and a content of the second high-density polyethylene (C) is in a range of 20 mass% to 45 mass%.

The content of the polypropylene (A) in the first layer is preferably 5 mass% or more, and more preferably 10 mass% or more from the viewpoint of the meltdown characteristic, and is preferably 30 mass% or less, and more preferably 25 mass% or less from the viewpoint of reducing air permeability (Gurley value).

The content of the first high-density polyethylene (B) in the first layer is preferably 30 mass% or more, and more preferably 35 mass% or more from the viewpoint of uniformity of pores, and is preferably 75 mass% or less, and more preferably 65 mass% or less from the viewpoint of obtaining the desired shutdown function and meltdown characteristic by containing other resin components sufficiently.

The content of the second high-density polyethylene (C) having a low melting point in the first layer is preferably 20 mass% or more, and more preferably 25 mass% or more from the viewpoint of the shutdown function, and is preferably 45 mass% or less, and more preferably 40 mass% or less from the viewpoint of reducing air permeability (Gurley value).

[Polyethylene (D) in the second layer]

The polyethylene (D) contained in the second layer preferably contains an ultrahigh molecular weight polyethylene (d1) having a weight average molecular weight (Mw) of 1,000,000 or more. A content of the ultrahigh molecular weight polyethylene (d1) in the second layer is preferably in a range of 2 mass% to 45 mass%. By containing the ultrahigh molecular weight polyethylene (d1), a membrane excellent in forming process stability, mechanical strength, porosity, and air permeability can be formed.

The weight average molecular weight (Mw) of the ultrahigh molecular weight polyethylene (d1) is $1 \times 10^6$ or more, preferably $1 \times 10^6$ to $8 \times 10^6$, and more preferably $1.2 \times 10^6$ to $3 \times 10^6$. In the case where the Mw is in the above-described range, the polyolefin composite porous membrane in the present embodiment has good formability. The Mw is a value measured by gel permeation chromatography (GPC) described below.

The ultrahigh molecular weight polyethylene (d1) is not particularly limited as long as it satisfies the above range of the Mw, and commonly used ones such as a homopolymer of ethylene and ethylene-α-olefin copolymer, can be used. As the α-olefin of the ethylene-α-olefin copolymer, propylene, 1-butene, 1-pentene, 1-hexene, 4-methyl-1-pentene, 1-octene, vinyl acetate, methyl methacrylate, and styrene are preferred. A content of the α-olefin units other than the ethylene units in the ultrahigh molecular weight polyethylene is preferably 5 mol% or less. One kind of the ultrahigh molecular weight polyethylene may be used alone, or two or more kinds thereof may be used in combination. For example, two or more kinds of ultrahigh molecular weight polyethylene, which have different Mw, may be mixed and used.

[Composition of second layer]

The content of the ultrahigh molecular weight polyethylene (d1) in the second layer is preferably in a range of 2 mass% to 45 mass%. In the case where the content of the ultrahigh molecular weight polyethylene (d1) is in the above-described range, a high mechanical strength and a high porosity can be obtained even in the case where the thickness of the polyolefin composite porous membrane is reduced. From the viewpoint of obtaining a more sufficient addition effect, the content of this ultrahigh molecular weight polyethylene (d1) in the second layer is preferably 5 mass% or more, more preferably 10 mass% or more, and still more preferably 20 mass% or more. From the viewpoint of the formability and mechanical characteristics of the membrane at a level required in recent years, the above content is preferably 45 mass% or less, and more preferably 40 mass% or less.

The second layer may include, as the polyethylene (D), a polyethylene (d2) other than the ultrahigh molecular weight polyethylene (d1). As the polyethylene (d2) other than the ultrahigh molecular weight polyethylene, a high-density polyethylene (density: 0.920 to 0.970 g/cm$^3$) is preferred, and it is more preferable to use a high-density polyethylene having a melting point of 130°C or higher, from the viewpoint of the forming process stability and the mechanical strength. The polyethylene (d2) may be the same as the polyethylene (B), and is not particularly limited.

The weight average molecular weight (Mw) of the polyethylene (d2) is preferably $1 \times 10^4$ or more and less than $1 \times 10^6$, more preferably $1 \times 10^5$ to $9 \times 10^5$, and still more preferably $2 \times 10^5$ to $8 \times 10^5$. In the case where the Mw of the polyethylene is within the above-described range, good melt extrusion characteristics and stretching characteristics can be obtained. In addition, the molecular weight distribution (Mw/Mn) of the polyethylene is preferably 1.0 to 20, and more preferably 3.0 to 15.0, from the viewpoint of extrusion formability and physical property control by stable crystallization control.

The content of the polyethylene (D) in the second layer may be set in a range of 55 mass% to 100 mass%, and the content of the other resin component (E) other than the polyethylene (D) may be set to 45 mass% or less. The content of the other resin component (E) in the second layer can be adjusted, as appropriate, within a range in which the effect of the present embodiment is not inhibited.

In the case where the second layer does not contain the other resin component (E), the content of the high-density polyethylene (d2) may be set in a range of 55 mass% to 98 mass% in a case where the content of the ultrahigh molecular weight polyethylene (d1) in the second layer is 2 mass% to 45 mass%. In a case where the content of the ultrahigh molecular weight polyethylene (d1) in the second layer is 10 mass% to 45 mass%, the content of the high-density polyethylene (d2) may be set in a range of 55 mass% to 90 mass%. In a case where the content of the ultrahigh molecular weight polyethylene (d1) in the second layer is 20 mass% to 40 mass%, the content of the high-density polyethylene (d2) may be set in a range of 60 mass% to 80 mass%.

The second layer may contain other resin component (E) as necessary. The other resin component (E) is preferably a heat resistant resin, and examples of the heat resistant resin include a crystalline resin having a melting point of 150°C or higher (here, the case of a partially crystalline resin falls within the meaning of the crystalline resin), and/or an amorphous resin having a glass transition temperature (Tg) of 150°C or higher. Here, the Tg is a value measured in accordance with JIS K 7121.

Specific examples of the other resin component (E) include polyester, polymethylpentene [PMP or TPX (transparent polymer X), melting point: 230°C to 245°C], polyamide (PA, melting point: 215°C to 265°C), polyarylene sulfide (PAS), fluorine-containing resins (such as polyvinylidene fluoride (PVDF), polytetrafluoroethylene (PTFE), copolymers of fluorinated olefins such as vinylidene fluoride and tetrafluoroethylene, etc.), polystyrene (PS, melting point: 230°C), polyvinyl alcohol (PVA, melting point: 220°C to 240°C), polyimide (PI, Tg: 280°C or higher), polyamide imide (PAI, Tg: 280°C), polyether sulfone (PES, Tg: 223°C), polyetheretherketone (PEEK, melting point: 334°C), polycarbonate (PC, melting point: 220°C to 240°C), cellulose acetate (melting point: 220°C), cellulose triacetate (melting point: 300°C), polysulfone (Tg: 190°C), and polyetherimide (melting point: 216°C). The resin component is not limited to a single resin component, and may be formed of a plurality of resin components.

In addition, the other resin component (E) may contain other polyolefins other than the above-described polyethylene (D) as necessary, and at least one kind selected from the group consisting of polybutene-1, polypentene-1, polyhexene-1, and polyoctene-1, which have Mw of $1 \times 10^4$ to $4 \times 10^6$, and polyethylene wax having Mw of $1 \times 10^3$ to $1 \times 10^4$, may be used.

A content of the polyolefin other than the above-described polyethylene (D) can be adjusted, as appropriate, in a range in which the effect of the present embodiment is not inhibited. The content is preferably less than 5 mass%, more preferably less than 2 mass%, and still more preferably less than 1 mass%, and may be 0 mass%, relative to 100 mass% of the entire second layer.

In addition, the other resin component (E) may also contain a small amount of polypropylene in a range in which the effect of the present embodiment is not inhibited. A content of the polypropylene is, for example, preferably less than 5 mass% or less, more preferably less than 2 mass%, and still more preferably less than 1 mass%, and may be 0 mass%, relative to 100 mass% of the entire second layer.

One kind of the other resin component (E) may be used alone, or two or more kinds thereof may be used in combination.

(Lamination structure)

The polyolefin composite porous membrane in the present embodiment includes the first layer (first microporous layer) and the second layer (second microporous layer), and preferably has a structure in which the first layer and the second layer are laminated in an order of the first layer/the second layer/the first layer. The first layer and the second layer are integrally laminated with each other.

The polyolefin composite porous membrane in the present embodiment has such a multilayer structure, so that the shutdown characteristic, the melt down characteristic and the strength are achieved at a well-balanced and high level, as compared with a single-layer polyolefin microporous membrane. The first layer can mainly contribute to the shutdown characteristic and the meltdown characteristic, and the second layer can mainly contribute to the strength.

The thickness of the second layer relative to the thickness of the entire polyolefin composite porous membrane is preferably in a range of 60% to 95%. In the case where the thickness of the second layer is 60% or more relative to the thickness of the entire membrane, the sufficient strength can be obtained. In the case where the thickness of the second layer is 95% or less relative to the thickness of the entire membrane, a thickness of the first layer can be ensured and the excellent shutdown characteristic and melt down characteristic can be obtained while sufficient membrane strength is obtained. The thickness of the second layer relative to the thickness of the entire membrane is more preferably 70% or more, still more preferably 75% or more, from the viewpoint of obtaining more sufficient strength, and is more preferably 93% or less, still more preferably 90% or less, from the viewpoint of obtaining the shutdown characteristic and the meltdown characteristic while ensuring the thickness of the first layer sufficiently. Therefore, the thickness of the first layer (the total thickness of the first layers, in the case where the first layers are disposed on both surfaces of the second layer) is preferably 5% or more, more preferably 7% or more, and still more preferably 10% or more, relative to the thickness of the entire membrane. In the case where the first layers are disposed on both surfaces of the second layer, the thicknesses of the two first layers are preferably approximately the same thickness, and a thickness ratio of one first layer to the other first layer may be set in a range of 40/60 to 60/40 when the total thickness is set as 100, and is preferably in a range of 45/55 to 55/45.

[Membrane thickness]

The polyolefin composite porous membrane in the present embodiment has a membrane thickness of preferably 25 $\mu$m or less. The membrane thickness is preferably 1 $\mu$m or more, more preferably 2 $\mu$m or more, and still more preferably 3 $\mu$m or more. In addition, the membrane thickness is preferably 18 $\mu$m or less, more preferably 16 $\mu$m or less, and still more preferably 15 $\mu$m or less. In the case where the membrane thickness is in the above-described range, the battery capacity can be improved in a case where the polyolefin composite porous membrane in the present embodiment is used as a battery separator.

The membrane thickness can be controlled, for example, by adjusting the discharge volume from a T die, the rotation speed of the cooling roller, the line speed, the stretching ratio, and the like, as appropriate.

(Porosity)

The polyolefin composite porous membrane in the present embodiment has a porosity of preferably 30% to 70%, and more preferably 40% to 60%. The porosity can be set to the above-described range by adjusting the content of the resin component in each layer, the stretching ratio in the stretching step described below, and the like, even in the case of a small membrane thickness. The membrane thickness and the porosity are values measured by the methods described in the following Example.

(Air permeability)

The air permeability of the polyolefin composite porous membrane in the present embodiment is preferably 70 sec/100 cm$^3$ or more and 220 sec/100 cm$^3$ or less when converted at a thickness of 12 $\mu$m. In addition, in terms of the upper limit of the air permeability is preferably 210 sec/100 cm$^3$ or less, more preferably 200 sec/100 cm$^3$ or less, and in terms of the lower limit, the air permeability is more preferably 110 sec/100 cm$^3$ or more, still more preferably 120 sec/100 cm$^3$ or more. The air permeability is in the above-described range, so that ion permeability is excellent, impedance is lowered, and battery output can be improved, when the polyolefin composite porous membrane is used as a battery separator. The air permeability can be controlled by adjusting the gel-like sheet, the stretching condition after drying, and the like.

[Maximum pore diameter (maximum flow pore diameter)]

Regarding the polyolefin composite porous membrane in the present embodiment, the maximum pore diameter (maximum flow pore diameter), which is measured by using a palm porometer in an order of Dry-up and Wet-up, is preferably 5 nm or more and 70 nm or less. In terms of the lower limit, the maximum pore diameter is preferably 10 nm or more, more preferably 15 nm or more, and still more preferably 20 nm or more. In terms of the upper limit, the maximum pore diameter is preferably 70 nm or less, more preferably 65 nm or less, and still more preferably 63 nm or less.

The pore diameter measured by the palm porometer indicates the pore diameter of a through hole in the membrane, and the maximum pore diameter is also referred to as a bubble point pore diameter. In the case where the maximum pore diameter is in the above-described range, a dense pore structure having high uniformity of the through-hole diameter is obtained. In the battery separator having such a pore structure, a passage path of ions can be uniformly dispersed in an in-plane direction of the separator. It is possible to improve the cycle life of the battery, for example, local clogging and dendrite growth are prevented. In addition, the improvement in battery safety and the improvement in output characteristics can also be expected.

The maximum pore diameter can be controlled by adjusting the stretching ratio in the stretching step described below, and the like as appropriate.

The maximum pore diameter is a value measured by the method described in the following Example.

(Average flow pore diameter)

Regarding the polyolefin composite porous membrane in the present embodiment, in terms of the lower limit, an average flow pore diameter, which is measured by using a palm porometer in an order of Dry-up and Wet-up, is preferably 20 nm or more, and in terms of the upper limit, the above-described average flow pore diameter is 40 nm or less. A battery separator in which the average flow pore diameter is in the above-described range, the rise in impedance or the decrease in air permeability and porosity are prevented, and the improvement of the battery capacity and the output can be expected.

The average pore diameter can be controlled by adjusting the stretching ratio in the stretching step described below, and the like.

The average pore diameter is a value measured by the method described in the following Example.

(Puncture strength)

The puncture strength of the polyolefin composite porous membrane in the present embodiment, converted at a thickness of 12 $\mu$m and a porosity of 50%, is preferably 270 cN or more, and more preferably 280 cN or more. The upper limit of the puncture strength is not particularly limited, and is 780 cN. The puncture strength is in the above-described range, so that even in the case where the thickness of the membrane is reduced, the mechanical strength is excellent, and in the case where the polyolefin composite porous membrane is used as a battery separator, film rupture and a short circuit due to the impact are prevented, and safety is excellent.

The puncture strength can be controlled by adjusting the resin composition for each layer, the stretching ratio in the stretching step, and the like.

The puncture strength is a value measured by the method described in the following Examples.

(Shutdown temperature)

The shutdown temperature (SDT) of the polyolefin composite porous membrane in the present embodiment is preferably in a range of 120°C to 134°C, and is more preferably lower than 133°C. From the viewpoint of thermal stability during membrane formation, the SDT is preferably 110°C or higher, more preferably 115°C or higher, and still more preferably 120°C or higher. The SDT is in such a range, so that a uniform structure can be formed as a microporous membrane, and the safety of a battery can be improved because pores can be rapidly blocked due to heat generation when the battery is abnormal, and the battery reaction can be stopped.

The SDT is a temperature at which the air permeability measured while heating is performed at a temperature rising rate of 5°C/min reaches $1 \times 10^5$ sec/100 cm$^3$, and the SDT can be a value measured by the method described in the following Example.

(Meltdown temperature)

The meltdown temperature (MDT) of the polyolefin composite porous membrane in the present embodiment is preferably 160°C or higher and preferably 190°C or lower. The MDT is in the above-described range, so that the heat resistance is more excellent, and the safety of the battery can be improved.

The MDT can be improved by adding a polypropylene having a melting point higher than that of polyethylene. In addition, the MDT can be adjusted by adjusting a content of the polypropylene or adjusting a thickness ratio of the first layer to the second layer and the like, as appropriate.

The MDT is a temperature at which the air permeability measured while heating is performed at a temperature rising rate of 5°C/minute reaches $1 \times 10^5$ seconds/100 cm$^3$, that is, the above-described SDT is reached, and then an air permeability measured while the temperature is continued to be raised at a temperature rising rate of 5°C/minute is less than $1 \times 10^5$ seconds/100 cm$^3$ again, and the MDT can be a value measured by the method described in the following Example.

(Impedance)

In the polyolefin composite porous membrane in the present embodiment, the impedance measured by an impedance measurement device is preferably less than 10.0 $\Omega \cdot$cm$^2$ more preferably less than 9.0 $\Omega \cdot$cm$^2$, and still more preferably 8.0 $\Omega \cdot$cm$^2$ or less. The impedance is preferably 1.0 $\Omega \cdot$cm$^2$ or more. The impedance is in the above-described range, so that the output characteristics of the battery can be improved in the case where the polyolefin composite porous membrane is used as a battery separator.

The impedance can be controlled by adjusting the stretching ratio in the stretching step described below, and the like.

(Method for producing polyolefin composite porous membrane)

A method for producing the polyolefin composite porous membrane in the present embodiment includes: a step of laminating, in a molten state, a first solution which contains a solvent and a first resin material containing the polypropylene (A), the first high-density polyethylene (B) having a melting point of 130°C or higher, and the second high-density polyethylene (C) having a melting point of 120°C or higher and lower than 130°C, and a second solution which contains a solvent and a second resin material containing the polyethylene (D); and a step of stretching the obtained laminated body to form a stretch formed product.

The first resin material and the second resin material are materials for forming the first layer and the second layer described above, respectively. The resin components (A), (B), (C), and (D) constituting the first and second resin materials are equivalent to the resin components (A), (B), (C), and (D) constituting the first and second layers, respectively. The compositions of the first resin material and the second resin material may be changed depending on the compositions of the first layer and the second layer to be formed as appropriate.

In the method for producing the polyolefin composite porous membrane in the present embodiment, it is preferable that a content of the polypropylene (A) in the first resin material is in a range of 5 mass% to 30 mass%, a content of the first high-density polyethylene (B) in the first resin material is in a range of 30 mass% to 75 mass%, and a content of the second high-density polyethylene (C) in the first resin material is in a range of 20 mass% to 45 mass%, and it is preferable that the second resin material contains an ultrahigh molecular weight polyethylene having a weight average molecular weight (Mw) of 1,000,000 or more as the polyethylene (D), and a content of the ultrahigh molecular weight polyethylene in the second resin material is in a range of 2 mass% to 45 mass%.

In addition, in the method for producing the polyolefin composite porous membrane in the present embodiment, the second high-density polyethylene (C) preferably contains an ethylene-$\alpha$-olefin copolymer, and more preferably contains an ethylene-butene copolymer.

The method for producing the polyolefin composite porous membrane in the present embodiment includes the above-described steps, and is not limited as long as the polyolefin composite porous membrane described above can be produced. The above production method can be performed in accordance with a common forming method. For example, methods described in Japanese Patent No. 2132327 and Japanese Patent No. 3347835, WO 2006/137540 A1, and the like may be used. Specifically, a first production method preferably includes the following steps (1) to (7), and further includes the following step(s) (8) and/or (9).

The first production method includes:

(1) a step of melt-kneading the first resin material and a membrane-forming solvent, thereby preparing a first polyolefin solution;
(2) a step of melt-kneading the second resin material and a membrane-forming solvent, thereby preparing a second polyolefin solution;
(3) a step of co-extruding the first and the second polyolefin solutions to form a multilayer sheet and then cooling the multilayer sheet, thereby forming a gel-like multilayer sheet;
(4) a first stretching step of stretching the gel-like multilayer sheet;

(5) a step of removing the membrane-forming solvent from the stretched gel-like multilayer sheet (stretch formed product);

(6) a step of drying the multilayer sheet (composite porous membrane) from which the membrane-forming solvent has been removed;

(7) a second stretching step of stretching the multilayer sheet (composite porous membrane) after drying;

(8) a step of heat-treating the multilayer sheet (composite porous membrane) after drying; and

(9) a step of crosslinking-treating and/or hydrophilization-treating the multilayer sheet (composite porous membrane) after the stretching step.

It is preferable that in step (3), the first and second polyolefin solutions are simultaneously extruded by a multilayer die under certain conditions to form a multilayer sheet. As a result, it is possible to produce a polyolefin composite porous membrane which is excellent in adhesion between layers, and has the shutdown characteristic, the meltdown characteristic and the mechanical strength that cannot be achieved with a single layer in a case where the polyolefin composite porous membrane is used as a battery separator. The good control of the porosity and the micropore structure can be achieved even in the case of a small membrane thickness by performing stretching under suitable temperature conditions in steps (4) and (7) in addition to the use of the above-described resin materials in steps (1) and (2).

Further, during reduction of the membrane thickness, a stretching ratio (B) in the above-described first stretching step and a stretching ratio (C) in the above-described second stretching step preferably satisfy the following relationship 4, and further more preferably satisfy the following relationship 5, from the viewpoint of performing better control of the porosity and the micropore structure.

$$0.01 \leq A/(B{\times}C) \leq 0.35 \quad \text{(Relationship 4)}$$

$$0.04 \leq A/(B{\times}C) \leq 0.30 \quad \text{(Relationship 5)}$$

In the relationship, A refers to the content of the polypropylene in the polyolefin composite porous membrane relative to 100 mass% being a total of the above-described first and second resin materials in the polyolefin composite porous membrane.

In the case where the content of the propylene in the polyolefin composite porous membrane is large, the pore diameter (maximum pore diameter, average flow pore diameter) tends to be small. Therefore, in a case where the content of propylene is increased, the pore diameter may become too small, the air permeability value or the impedance increases, and the output characteristics and cycle life of the battery may become insufficient when the polyolefin composite porous membrane is used as a battery separator. Therefore, by setting the stretching ratios (B) and (C) within the range of the above-described relationship depending on the content of polypropylene, it is possible to obtain a dense and highly uniform micropore structure having good heat resistance.

Further, since the content of the polypropylene contained in the first resin material greatly affects the micropore structure of the polyolefin composite porous membrane, the stretching ratio (B) in the first stretching step and the stretching ratio (C) in the second stretching step preferably satisfy the following relationship 6, and further more preferably satisfy the following relationship 7.

$$0.06 \leq D/(B{\times}C) \leq 1.70 \quad \text{(Relationship 6)}$$

$$0.10 \leq D/(B{\times}C) \leq 1.50 \quad \text{(Relationship 7)}$$

In the relationship, D refers to the content of the polypropylene relative to 100 mass% being the entire first resin material.

In the case where the above-described relationship is satisfied, it is possible to perform better control of the porosity and the micropore structure during reduction of the membrane thickness.

Hereinafter, the steps are described.

(Steps (1) and (2): preparation of first and second polyolefin solutions)

Suitable membrane-forming solvents are added to the first resin material and the second resin material, respectively, and then the mixtures are melt-kneaded to prepare first and second polyolefin solutions, respectively. As the melt-kneading method, a method using a twin-screw extruder as described in, for example, Japanese Patent No. 2132327 and Japanese Patent No. 3347835 may be used. As the melt-kneading method using the twin-screw extruder, a common method may be applied.

A ratio of the membrane-forming solvent to the first resin material in the first polyolefin solution and a blending ratio of the membrane-forming solvent to the second resin material in the second polyolefin solution are not particularly limited, and the content of the membrane-forming solvent is preferably 70 to 80 parts by mass relative to 20 to 30 parts by mass of the first or the second resin material. In the case where the ratio of the first or the second resin material is within the above-described range, swelling or neck-in can be prevented at an outlet of a die when the first and second polyolefin solutions are extruded, and formability and self-supporting properties of an extrusion formed body (gel-like formed body) can be improved.

(Step (3): formation of gel-like multilayer sheet)

The first and second polyolefin solutions are respectively fed from an extruder to one die, and then, both solutions are combined in a form of layers and extruded in a sheet shape.

The extrusion method may be either a flat die method or an inflation method. In either of the methods, a method of supplying a solution to separate manifolds and laminating the solutions in a form of layers at an inlet of a lip of a multi-layer die (multi-manifold method) or a method of making a solution to be a layered flow in advance and supplying the layered flow to a die (block method) may be used. As the multi-manifold method and the block method, a common method may be applied. A gap of the multilayer flat die can be set to 0.1 mm to 5 mm. Extrusion temperature is preferably 140°C to 250°C, and extrusion speed is preferably 0.2 m/min to 15 m/min. The membrane thickness ratio of the first and second microporous layers can be adjusted by adjusting an extrusion amount of each of the first and the second polyolefin solutions.

As for the extrusion method, methods disclosed in, for example, Japanese Patent No. 2132327 and Japanese Patent No. 3347835 may be used.

The gel-like multilayer sheet is formed by cooling the laminated extruded formed body thus obtained. As for a method of forming the gel-like sheet, a method disclosed in, for example, Japanese Patent No. 2132327 and Japanese Patent No. 3347835 may be used. The cooling is preferably performed at a rate of 50°C/min or more at least until the temperature reaches the gelation temperature. The cooling is preferably performed until the temperature reaches 25°C or lower. By the cooling, micro phases of the first and second polyolefin solutions separated by the membrane-forming solvent can be fixed. In the case where the cooling rate is within the above-described range, a degree of crystallinity is maintained in an appropriate range, resulting in a gel-like multilayer sheet suitable for stretching. As for the cooling method, a method of bringing the laminated extruded formed body into contact with a refrigerant such as cool air or cooling water, a method of bringing the laminated extruded formed body into contact with a cooling roller, or the like can be used, and it is preferable to cool the laminated extruded formed body by bringing it into contact with a roller cooled by the refrigerant.

(Step (4): first stretching)

Next, the gel-like multilayer sheet thus obtained is stretched at least in a uniaxial direction. The gel-like multilayer sheet contains the membrane-forming solvent, and thus it can be uniformly stretched. After the gel-like multilayer sheet is heated, the gel-like multilayer sheet is preferably stretched at a predetermined magnification by a tenter method, a roll method, an inflation method, or a combination thereof. The stretching may be uniaxial stretching or biaxial stretching, and is preferably biaxial stretching. In the case of biaxial stretching, simultaneous biaxial stretching, sequential stretching and multistage stretching (for example, a combination of simultaneous biaxial stretching and sequential stretching) may be used.

In the case of uniaxial stretching, a stretching ratio (area stretching ratio) in this step is preferably 2 times or more, and more preferably 3 times to 30 times. In the case of biaxial stretching, the stretching ratio (area stretching ratio) in this step is preferably 9 times or more, more preferably 16 times or more, and still more preferably 25 times or more. In addition, a stretching ratio in both a longitudinal direction (MD direction) and a transverse direction (TD direction) is preferably 3 times or more, and the stretching magnification in the MD and TD directions may be the same or different. In the case where the stretching ratio is 9 times or more, improvement in puncture strength can be expected. The stretching ratio in this step refers to an area stretching ratio of the microporous membrane immediately before being subjected to the next step to the gel-like multilayer sheet immediately before this step as a reference. In addition, the stretching ratio is more preferably within the above-described range of the stretching ratio and satisfies any one or more of the above-described Relationships (4) to (7).

The stretching temperature in this step is preferably in a range of a crystalline dispersion temperature (Tcd) of the second resin material to Tcd+30°C, more preferably in a range of crystalline dispersion temperature (Tcd)+5°C to crystalline dispersion temperature (Tcd)+28°C, and still more preferably in a range of Tcd+10°C to Tcd+26°C. In the case where the stretching temperature is within the above-described range, the film rupture due to the stretching of the second resin material is prevented, and stretching at a high magnification is enabled.

The crystalline dispersion temperature (Tcd) is determined by measurement of temperature characteristics of dynamic viscoelasticity in accordance with ASTM D4065. The ultrahigh molecular weight polyethylene, polyethylene other than the ultrahigh molecular weight polyethylene, and a polyethylene composition have a crystalline dispersion temperature of 90°C to 100°C, so that in terms of the lower limit, the stretching temperature is preferably 90°C or more, more preferably 110°C or more, still more preferably 112°C or more, and even more preferably 113°C or more. In addition, in terms of the upper limit, this stretching temperature is preferably 130°C or less, more preferably 120°C or less, and still more preferably 119°C or less.

By the stretching as described above, the polyolefin phase is refined, and a large number of fibrils are formed. The fibrils form a three-dimensionally and irregularly linked mesh structure, and the gel-like multilayer sheet becomes a multilayer microporous membrane. The stretching improves mechanical strength and expands pores, and when stretching is performed under appropriate conditions, it is possible to control the through-hole diameter and to have a high porosity even in the case of a further small membrane thickness. Therefore, a membrane suitable for a safer and high-performance battery separator can be formed.

The stretching may be performed by providing a temperature distribution in the membrane thickness direction depending on desired physical properties, and as a result, a multilayer microporous membrane excellent in mechanical strength is obtained. Details of the method are described in Japanese Patent No. 3347854.

(Step (5): removal of membrane-forming solvent)

The membrane-forming solvent is removed (washed) by using a cleaning solvent. The first and second polyolefin phases are phase-separated from the membrane-forming solvent phase, so that the membrane-forming solvent is removed from the pores that are three-dimensionally and irregularly communicated with each other in the multilayer microporous membrane, and pores are generated in this step.

The cleaning solvent and a method of removing a membrane-forming solvent using the same are common, and description thereof is omitted. For example, methods disclosed in Japanese Patent No. 2132327 and JP 2002-256099 A can be used.

(Step (6): drying)

The multilayer microporous membrane from which the membrane-forming solvent has been removed is dried by a heat drying method or an air drying method. Drying temperature is preferably equal to or lower than the crystalline dispersion temperature (Tcd) of the second resin material, and is particularly preferably lower than Tcd by 5°C or higher. In the case where a total amount of the multilayer microporous membrane is defined as 100 mass% (dry weight), the drying is preferably performed until an amount of the remaining solvent (membrane-forming solvent and cleaning solvent) is 5 mass% or less, more preferably 3 mass% or less. In the case where the remaining solvent is within the above-described range, porosity of the multilayer microporous membrane can be maintained during a subsequent stretching step and a heat treatment step of the multilayer microporous membrane, and deterioration of permeability is inhibited.

(Step (7): second stretching)

The multilayer microporous membrane after drying is preferably stretched at least in a uniaxial direction. The stretching of the multilayer microporous membrane can be performed by a tenter method or the like in the same manner as the first stretching described above, while performing the heating. The stretching may be uniaxial stretching or biaxial stretching, and is preferably biaxial stretching. In the case of biaxial stretching, either of simultaneous biaxial stretching or sequential stretching may be performed, and the simultaneous biaxial stretching is preferred.

The stretching temperature in this step is not particularly limited, and is preferably 90°C to 135°C, and more preferably 95°C to 130°C.

A stretching ratio (area stretching ratio), in an uniaxial direction, of the stretching of the multilayer microporous membrane in this step is, in terms of the lower limit, preferably more than 1.0 time, more preferably 1.1 times or more, and still more preferably 1.2 times or more, and in terms of the upper limit, the stretching ratio is preferably 1.8 times or less. In the case of uniaxial stretching, the above stretching ratio (area stretching ratio) is preferably more than 1.0 time and 2.0 times or less in MD direction or TD direction. In the case of biaxial stretching, in terms of the lower limit, the area stretching ratio is preferably more than 1.0 time, more preferably 1.1 times or more, and still more preferably 1.2 times or more, and in terms of the upper limit, the stretching ratio is preferably 3.5 times or less. Each of the stretching ratios in the MD direction and the TD direction is preferably more than 1.0 time and 2.0 times or less, and the stretching ratios in the MD direction and the TD direction may be the same or different. The stretching ratio in this step refers to a stretching ratio of the microporous membrane immediately before being subjected to the next step to the microporous membrane immediately before this step as a reference. In addition, the stretching ratio is more preferably within the above-described range of the stretching ratio and satisfies a relationship of any one or more of the above-described Relationships (4) to (7).

(Step (8): heat treatment)

The multilayer microporous membrane after drying can be subjected to a heat treatment. The heat treatment stabilizes the crystal and makes a lamellae uniform. As a heat treatment method, a heat fixing treatment and/or a heat relaxation treatment may be used. The heat fixing treatment is a heat treatment of heating a membrane while keeping dimensions of the membrane unchanged. The heat relaxation treatment is a heat treatment of causing a membrane to be heat-shrunk in the MD direction or TD direction during heating of the membrane. The heat fixing treatment is preferably performed by a tenter method or a roll method. As for the heat relaxation treatment method, for example, a method described in JP 2002-256099 A is exemplified. The heat treatment temperature is preferably within a range of Tcd (crystalline dispersion temperature) of the second resin material to Tm (melting point), more preferably within a range of the second stretching temperature of the multilayer microporous membrane $\pm$ 5°C, and still more preferably within a range of the second stretching temperature of the multilayer microporous membrane $\pm$ 3°C.

(Step (9): crosslinking treatment and hydrophilization treatment)

Further, a crosslinking treatment and a hydrophilization treatment can be performed on the multilayer microporous membrane before or after stretching.
For example, the crosslinking treatment is performed by irradiating the multilayer microporous membrane with ionizing radiation such as $\alpha$ rays, $\beta$ rays, $\gamma$ rays, and electron beams. In the case of irradiation with electron beams, an electron dose of 0.1 Mrad to 100 Mrad is preferred, and an acceleration voltage of 100 kV to 300 kV is preferred. Meltdown temperature of the multilayer microporous membrane can be increased by the crosslinking treatment.
On the other hand, the hydrophilization treatment can be performed by monomer graft, a surfactant treatment, corona discharge, or the like. The monomer graft is preferably performed after the crosslinking treatment.

(Formation of another porous layer)

Another layer other than the first and second layers may be provided on at least one surface of the obtained polyolefin composite porous membrane. Examples of the another layer include a porous layer (coating layer) formed by using a filler-containing resin solution containing a filler and a resin binder, or a heat resistant resin solution.
As the filler, an inorganic filler or an organic filler such as a crosslinked polymer filler is exemplified, and it is preferable that the filler has a melting point of 200°C or higher and a high electrical insulation property and is electrochemically stable in a use range of a lithium ion secondary battery. Examples of the inorganic filler include: ceramics such as oxide-based ceramics, such as alumina, silica, titania, zirconia, magnesia, ceria, yttria, zinc oxide, and iron oxide, nitride-based ceramics such as silicon nitride, titanium nitride, and boron nitride, silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and quartz sand; glass fibers and fluorides thereof. Examples of the organic filler include crosslinked polystyrene particles, crosslinked acrylic resin particles, crosslinked methyl methacrylate particles, and fluororesin particles such as PTFE (polytetrafluoroethylene). One kind of these fillers may be used alone, or two or more kinds thereof may be used in combination.
An average particle diameter of the above-described filler is not particularly limited, and is, for example, preferably 0.1 $\mu$m or more and 3.0 $\mu$m or less.
The proportion (mass fraction) of the above-described filler in the porous layer is preferably 50% or more and 99.99% or less, from the viewpoint of heat resistance.
As the above-described resin binder, the polyolefin or heat resistant resin, which is described as the other resin component contained in the second resin material described above, may be preferably used.
The proportion of the above-described resin binder to the total amount of the filler and the resin binder is preferably 0.5% or more and 8% or less by volume fraction, from the viewpoint of a binding property between the filler and the resin binder.
As the above-described heat resistant resin, a resin similar to the heat resistant resin, which is described in the item of the other resin component contained in the second resin material described above, may be preferably used.
A method of coating a surface of the polyolefin composite porous membrane with the filler-containing resin solution or the heat resistant resin solution is not particularly limited as long as the method can achieve the required layer thickness and coating area. Specific examples of the method include a gravure coater method, a small-diameter gravure coater method, a reverse roll coater method, a transfer roll coater method, a kiss coater method, a dip coater method, a knife coater method, an air doctor coater method, a blade coater method, a rod coater method, a squeeze coater method, a cast coater method, a die coater method, a screen printing method, and a spray coating method.

A solvent of the filler-containing solution or the heat resistant resin solution is not particularly limited as long as it is a solvent that can be removed from the solution applied to the polyolefin composite porous membrane. Specific examples of the solvent include N-methylpyrrolidone, N,N-dimethylformamide, N,N-dimethylacetamide, water, ethanol, toluene, thermal xylene, methylene chloride, and hexane.

A method of removing the solvent is not particularly limited as long as it is a method that does not adversely affect the polyolefin composite porous membrane. Specific examples of the method include a method of drying the coated polyolefin composite porous membrane at a temperature lower than its melting point while fixing it, a reduced-pressure drying method, and a method of extracting a solvent while immersing the polyolefin composite porous membrane in a poor solvent of the resin binder or the heat resistant resin to solidify the resin.

A thickness of the other porous layer formed on the polyolefin composite porous membrane is preferably 0.5 $\mu$m or more and 100 $\mu$m or less from the viewpoint of improving heat resistance.

The proportion of the thickness of the above-described porous layer to the thickness of the entire polyolefin composite porous membrane including the porous layer can be appropriately adjusted and used depending on the purpose. Specifically, the proportion is, for example, preferably 15% or more and 80% or less, and more preferably 20% or more and 75% or less.

In addition, the above-described porous layer may be formed on at least one surface of the polyolefin composite porous membrane, or may be formed on both surfaces thereof.

(Lithium ion secondary battery)

The polyolefin composite porous membrane in the present embodiment may be used as a battery separator, and may be preferably used as a separator of the lithium ion secondary battery. It is possible to provide a lithium ion secondary battery excellent in cycle characteristics by using the polyolefin composite porous membrane in the present embodiment as a separator.

In addition, the battery in the present embodiment includes a positive electrode, a negative electrode, and the above-described battery separator disposed between the positive electrode and the negative electrode.

Examples of the lithium ion secondary battery to which the polyolefin composite porous membrane in the present embodiment is applied include a lithium ion secondary battery having a structure in which a battery element, in which the negative electrode and the positive electrode are disposed to face each other via the separator, is impregnated with an electrolytic solution containing electrolytes and these are enclosed in an exterior material.

Examples of the negative electrode include a negative electrode mixture formed on a current collector, the negative electrode mixture including a negative electrode active material, a conductive assistant, and a binder. As the negative electrode active material, a material capable of doping and dedoping lithium ions is used. Specific examples thereof include a carbon material such as graphite and carbon, a silicon oxide, a silicon alloy, a tin alloy, a lithium metal, and a lithium alloy. As the conductive assistant, a carbon material such as acetylene black and Ketjen black is used. As the binder, styrene-butadiene rubber, polyvinylidene fluoride, polyimide, or the like is used. As the current collector, a copper foil, a stainless steel foil, a nickel foil, or the like is used.

Examples of the positive electrode include a positive electrode mixture formed on a current collector, the positive electrode mixture including a positive electrode active material, a binder, and a conductive assistant as necessary. Examples of the positive electrode active material include a lithium composite oxide containing at least one transition metal such as Mn, Fe, Co, and Ni. Specific examples thereof include lithium nickelate, lithium cobaltate, and lithium manganate. As the conductive assistant, a carbon material such as acetylene black and Ketjen black may be used. As the binder, polyvinylidene fluoride or the like may be used. As the current collector, an aluminum foil, a stainless steel foil, or the like may be used.

As the electrolytic solution, for example, a solution obtained by dissolving a lithium salt in a non-aqueous solvent may be used. Examples of the lithium salt include LiPF6, LiBF4, LiClO$_4$, and LiN(SO$_2$CF$_3$)$_2$. Examples of the non-aqueous solvent include propylene carbonate, ethylene carbonate, dimethyl carbonate, diethyl carbonate, ethyl methyl carbonate, and $\gamma$-butyrolactone, and a mixture of two or more of these solvents is usually used with various additives such as vinylene carbonate. An ionic liquid (room temperature molten salt) such as an imidazolium cation liquid may also be used.

Examples of the exterior material include a metal can or an aluminum laminate pack. Examples of a shape of the battery include a coin shape, a cylindrical shape, a square shape, and a laminate shape.

Examples

The present invention is described in more detail with reference to Examples, but the embodiments of the present invention are not limited to these examples. The evaluation methods, analysis methods and materials used in Examples are as follows.

<Evaluation method and analysis method>

(1) Membrane thickness ($\mu$m)

Membrane thicknesses of 5 points in a range of 95 mm × 95 mm of the porous membrane were measured by a contact thickness meter (Lightmatic manufactured by Mitutoyo Corporation), and an average value thereof was determined.

(2) Porosity (%)

The mass w1 of the porous membrane and the mass w2 of the resin (a resin having the same width, length, thickness, and composition as that of the porous membrane) having no pore were compared with each other and the porosity was measured by the following formula.

$$\text{Porosity (\%)} = (w2 - w1)/w2 \times 100$$

(3) Air permeability (sec/100 cm$^3$/12 $\mu$m)

The air permeability $P_1$ (sec/100 cm$^3$) for a porous membrane having a thickness $T_1$ ($\mu$m), which was measured in accordance with JIS P-8117 using an air permeability meter (EGO-1T, manufactured by Asahi Seiko Co., ltd.), was converted to the air permeability $P_2$, when the membrane thickness was set to 12 $\mu$m, by a formula: $P_2 = (P_1 \times 12)/T_1$.

(4) Maximum pore diameter and average flow pore diameter (nm)

The measurement was made in an order of Dry-up and Wet-up by using a palm porometer (CFP-1500A, manufactured by PMI). In Wet-up, pressure was applied to the porous membrane sufficiently immersed in Galwick (trade name) manufactured by PMI, whose surface tension was known, and a pore diameter converted from pressure at which air starts penetrating the porous membrane was regarded as the maximum pore diameter.
Regarding the average flow pore diameter, the pore diameter was converted from pressure at a point where a curve showing a slope of 1/2 of that of a pressure and flow rate curve in Dry-up measurement intersects a curve in Wet-up measurement. The following mathematical formula was used for the conversion of the pressure and the pore diameter.

$$d = C \cdot \gamma / P$$

In the above formula, "d" is the pore diameter ($\mu$m) of the porous membrane, "$\gamma$" is the surface tension (mN/m) of the liquid, "P" is the pressure (Pa), and "C" is constant.

(5) Puncture strength (cN)

The porous membrane having a thickness $T_1$ ($\mu$m) was punctured at a rate of 2 mm/s with a needle having a diameter of 1 mm whose tip end was spherical (curvature radius R: 0.5 mm), and the maximum load at this time was measured. The measurement value $L_1$ (cN) of the maximum load was converted to the maximum load $L_2$, when the membrane thickness was 12 $\mu$m and the porosity was 50%, by the following formula: $L_2 = (L_1 \times 12 \times 50)/(T_1 \times (100 - \text{porosity (\%)}))$, and the maximum load $L_2$ was regarded as the puncture strength.

(6) Shutdown temperature and meltdown temperature

The air permeability was measured by an Oken air permeability meter (EGO-1T, manufactured by Asahi Seiko Co., ltd.) while heating the porous membrane at a temperature rising rate of 5°C/min, and temperature at which the air permeability reached $1\times10^5$ seconds/100 cc Air that was a detection limit was determined and was regarded as the shutdown temperature (°C) (temperature rising air permeability SDT).

In addition, overheating was continued after shutdown, and temperature at which the air permeability was lower than $1\times10^5$ seconds/100 cc Air again was determined and was regarded as the meltdown temperature (°C) (temperature rising air permeability MDT).

(7) Heat shrinkage ratio

The obtained porous membrane was cut in 95 mm $\times$ 95 mm and the cut porous membrane was placed in an oven at 105°C for 8 hours and 120°C for 1 hour. The changes in the length before and after the placement were measured, and length change rates for lengths before the placement were respectively measured in the MD direction and the TD direction as the heat shrinkage ratios, and were regarded as the shrinkage ratio in the MD direction and the shrinkage ratio in the TD direction.

(8) Weight average molecular weight (Mw) and molecular weight distribution (Mw/Mn)

The weight average molecular weight (Mw), the number average molecular weight (Mn), and the molecular weight distribution (Mw/Mn) of polypropylene, ultrahigh molecular weight polyethylene (UHMwPE), and high-density polyethylene (HDPE) were determined under the following conditions by the gel permeation chromatography (GPC) method.

Measurement device: GPC-150C manufactured by Waters Corporation
Column: Shodex UT806M manufactured by Showa Denko K.K.
Column temperature: 135°C
Solvent (mobile phase): o-dichlorobenzene
Solvent flow rate: 1.0 ml/min
Sample concentration: 0.1 wt% (dissolution condition: 135°C/1h)
Injection volume: 500 $\mu$l
Detector: Differential refractometer (RI detector) manufactured by Waters Corporation
Calibration curve: The calibration curve was created, from a calibration curve obtained by using a monodisperse polystyrene standard sample, by using a predetermined conversion constant.

(9) Melt flow rate (MFR)

The MFR of high-density polyethylene was measured at 190°C under a load of 2.16 kg in accordance with JIS K7151 (ISO 293).

(10) Optimization of coating

When coating a microporous membrane, a surface layer of the microporous membrane preferably has a uniform structure. The uniform structure can be observed by, for example, a SEM image. When raw materials whose melting points are too different from each other are used for the surface structure of the microporous membrane, phase separation cannot be prevented when different polyolefins are mixed unless designed under very limited conditions, resulting in formation of a non-uniform structure. Therefore, a coating agent cannot be applied uniformly. From the above viewpoint, the case where the maximum flow diameter at which the non-uniform structure was noticeable was 70 nm or less was evaluated as "A (good)", and the case where the maximum flow pore diameter was more than 70 nm was evaluated as "B (poor)".

(11) External short circuit resistance

When a battery obtained by laminating and winding a positive electrode sheet, a separator (microporous membrane), and a negative electrode sheet and filling it with the electrolytic solution are penetrated by a foreign matter such as needles from outside, the temperature rises due to a short circuit between the electrodes, which may cause fires. Therefore, the battery preferably has such external short circuit resistance. Specifically, it is preferable that the microporous membrane has a low shutdown temperature (good shutdown response). For that reason, the case where the shutdown temperature of the microporous membrane was 134°C or lower which cannot be reached by general HDPE was evaluated as "A (good)", and the case where the shutdown temperature was higher than 134°C was evaluated as "B (poor)".

(12) Impact resistance

As evaluated by an impact test or the like, the microporous membrane preferably has high strength in order to prevent a short circuit and explosion due to direct contact of the electrodes since the separator is destroyed when impact is applied to the battery from outside. Therefore, regarding the puncture strength of the microporous membrane, the case where the puncture strength converted at a thickness of 12 μm and a porosity of 50% was 270 cN or more was evaluated as "A (good)", and the case where the puncture strength was less than 270 cN was evaluated as "B (poor)".

(13) High-temperature heat resistance

In order to maintain insulation and withstand inertial heat after, for example, the battery generates abnormal heat and the shutdown function is exhibited, it is preferable that the heat resistance of the membrane is high. Specifically, it is preferable that the meltdown temperature of the microporous membrane is high. Therefore, the case where the meltdown temperature of the microporous membrane was 160°C or higher which cannot be reached by HDPE was evaluated as "A (good)", and the case where the meltdown temperature was lower than 160°C was evaluated as "B (poor)".

(14) Cycle characteristics

In order to allow sufficient permeation of ions and maintain cycle characteristics, it is preferable that the porosity of the separator is equal to or more than a constant value. Further, in order to make the penetration path of ions uniform and prevent cycle characteristics from deteriorating due to dendrite generation or slight short circuit, it is preferable that the pore diameter is within a constant range. Therefore, the case where the porosity of the microporous membrane was 30% or more, the average flow pore diameter measured by a palm porometer was 20 nm or more and 40 nm or less and the maximum flow pore diameter measured by a palm porometer was 70 nm or less was evaluated as "A (good)", and the case where the above parameters fell out of the above-described range was evaluated as "B (poor)".

<Example and Comparative Examples>

(Example 1)

(1) Preparation of first polyolefin solution

With 100 parts by mass of the first polyolefin resin including 20 mass% of polypropylene (PP: melting point 162°C) having Mw of $2.0 \times 10^6$, 40 mass% of high-density polyethylene (HDPE: density 0.955 g/cm$^3$, melting point 135°C) having Mw of $5.6 \times 10^5$, and 40 mass% of low melting point high-density polyethylene (low melting point PE: density 0.951 g/cm$^3$, ethylene-butene copolymer, MFR: 135 g/10 min) having a melting point of 124°C, 0.2 parts by mass of tetrakis[methylene-3-(3,5-ditert-butyl-4-hydroxyphenyl)-propionate]methane as an antioxidant was blended, and a mixture was prepared.
25 parts by mass of the obtained mixture was introduced into a twin-screw extruder (inner diameter: 58 mm, L/D = 42) of a strong kneading type, and 75 parts by mass of liquid paraffin [35 cst (40°C)] was supplied through a side-feeder of the twin-screw extruder, followed by melt-kneading under the conditions of 210°C and 250 rpm, thereby preparing a first polyolefin solution.

(2) Preparation of second polyolefin solution

With 100 parts by mass of the second polyolefin resin including 40 mass% of ultrahigh molecular weight polyethylene (UHMwPE) having Mw of $2.0 \times 10^6$ and 60 mass% of high-density polyethylene (HDPE: density 0.955 g/cm$^3$) having Mw of $5.6 \times 10^5$, 0.2 parts by mass of tetrakis[methylene-3-(3,5-ditert-butyl-4-hydroxyphenyl)-propionate]methane as an antioxidant was blended, and a mixture was prepared.
25 parts by mass of the obtained mixture was introduced into another twin-screw extruder of the same type as above, and 75 parts by mass of liquid paraffin [35 cst (40°C)] was supplied through a side-feeder of the twin-screw extruder, followed by melt-kneading under the same conditions as above, thereby preparing a second polyolefin solution.

(3) Extrusion

The first and second polyolefin solutions were supplied from each twin-screw extruder to a three layer T die and extruded such that the layer thickness ratio was as follows: the first polyolefin solution/the second polyolefin solution/the first polyolefin solution was 10/80/10. The extruded formed body was cooled while drawing it at a take-off speed of 2 m/min by a cooling roller having a temperature controlled to be 30°C, and a gel-like three-layer sheet was formed.

(4) First stretching, removal of membrane-forming solvent, and drying

The gel-like three-layer sheet was subjected to simultaneous biaxial stretching (first stretching) at a stretch ratio of 5 times in both the MD direction and the TD direction at 115°C by a tenter stretching machine.
The gel-like three-layer sheet after stretching was fixed to an aluminum frame plate of 20 cm × 20 cm, followed by immersing in a methylene chloride bath having a temperature controlled to be 25°C, and then the liquid paraffin was removed while shaking the gel-like three-layer sheet at 100 rpm for 3 minutes, and the gel-like three-layer sheet was air-dried at room temperature.

(5) Second stretching and heat fixing

The dried membrane thus obtained was not subjected to the second stretching, and was subjected to a heat fixing treatment at 120°C for 15 minutes. The blending ratio of each component constituting the obtained polyolefin composite porous membrane, production conditions, evaluation results, and the like were shown in Table 1.

(Examples 2 and 3)

Polyolefin composite porous membranes were prepared in the same manner as in Example 1, except that the conditions described in Table 1 were changed in Examples 2 and 3.
The blending ratio of each component constituting the obtained polyolefin composite porous membrane, production conditions, evaluation results, and the like were shown in Table 1.

(Comparative Examples 1 to 7)

Polyolefin composite porous membranes were prepared in the same manner as in Example 1, except that the conditions described in Tables 1 and 2 were changed in Comparative Examples 1 and 2, and 6 and 7.
Polyolefin composite porous membranes were prepared in the same manner as in Example 1, except that the conditions described in Table 1 were changed and the second layer were not formed in Comparative Examples 3 to 5.
The blending ratio of each component constituting the obtained polyolefin composite porous membrane and the obtained single-layer porous membrane, production conditions, evaluation results, and the like were shown in Tables 1 and 2.

Table 1

|  |  | Example 1 | Example 2 | Example 3 | Comparative Example 1 | Comparative Example 2 |
|---|---|---|---|---|---|---|
| First layer | Proportion of UHMwPE (%) | - | - | - | - | 20 |
| | Proportion of HDPE (%) | 40 | 50 | 60 | 80 | 50 |
| | Proportion of low melting point PE (%) | 40 | 30 | 25 | - | 30 |
| | Proportion of PP (%) | 20 | 20 | 15 | 20 | - |
| | Resin concentration (%) | 25 | 25 | 25 | 25 | 25 |

(continued)

| | | Example 1 | Example 2 | Example 3 | Comparative Example 1 | Comparative Example 2 |
|---|---|---|---|---|---|---|
| Second layer | Proportion of UHMwPE (%) | 40 | 40 | 30 | 40 | 30 |
| | Proportion of HDPE (%) | 60 | 60 | 70 | 60 | 70 |
| | Proportion of low melting point PE (%) | - | - | - | - | - |
| | Proportion of PP (%) | - | - | - | - | - |
| | Resin concentration (%) | 25 | 25 | 25 | 25 | 25 |
| Layer composition ratio (skin/core/skin) | | 1/2/1 | 1/2/1 | 1/2/1 | 1/2/1 | 1/2/1 |
| Kinds of low melting point PE | | Ethylene-butene copolymer | Ethylene-butene copolymer | Ethylene-butene copolymer | - | Ethylene-butene copolymer |
| Density of low melting point PE (g/cm$^3$) | | 0.951 | 0.951 | 0.951 | - | 0.951 |
| Low melting point PE m.p. (°C) | | 124 | 124 | 124 | - | 124 |
| Ratio of first layer (%) | | 20 | 20 | 20 | 20 | 70 |
| Proportion of PP in entire layer (%) | | 4 | 4 | 3 | 4 | - |
| Proportion of low melting point PE in entire layers (%) | | 8 | 6 | 5 | - | 23 |
| Gel sheet stretching temperature (°C) | | 115 | 115 | 115 | 115 | 115 |
| Stretching ratio after drying (times) | | 1 | 1 | 1 | 1.4 | 1.4 |
| Ratio during relaxation after stretching | | 1 | 1 | 1 | 1.2 | 1.2 |

(continued)

| | | | Example 1 | Example 2 | Example 3 | Comparative Example 1 | Comparative Example 2 |
|---|---|---|---|---|---|---|---|
| Evaluation and analysis | Air permeability | Sec/100 cm$^3$ | 187 | 174 | 167 | 146 | 135 |
| | Membrane thickness | $\mu$m | 9 | 9 | 9 | 9 | 9 |
| | Porosity | % | 39 | 40 | 42 | 43 | 43 |
| | Converted puncture strength (Converted at a thickness of 12 $\mu$m and porosity of 50%) | cN | 287 | 299 | 284 | 309 | 219 |
| | 105°C 8 hr MD heat shrinkage ratio | % | 4.5 | 4.3 | 3.8 | 6.0 | 6.6 |
| | 105°C 8 hr TD heat shrinkage ratio | % | 2.3 | 2.1 | 1.8 | 2.6 | 3.0 |
| | 120°C 1 hr MD heat shrinkage ratio | % | 11.0 | 10.4 | 9.0 | 12.2 | 13.5 |
| | 120°C 1 hr TD heat shrinkage ratio | % | 9.0 | 8.6 | 7.8 | 8.9 | 9.9 |
| | Temperature rising air permeability SDT | °C | 131.5 | 131.9 | 132.4 | 135.8 | 132.2 |
| | Temperature rising air permeability MDT | °C | 165.2 | 165.4 | 164.0 | 170.0 | 148.4 |
| | Average flow pore diameter | nm | 35 | 36 | 38 | 34 | 35 |
| | Maximum pore diameter | nm | 54 | 53 | 55 | 54 | 50 |
| Battery influence | Optimization of coating | | A | A | A | A | B |
| | External short circuit resistance | | A | A | A | B | A |
| | Impact resistance | | A | A | A | A | B |
| | High-temperature heat resistance | | A | A | A | A | B |
| | Cycle characteristics | | A | A | A | A | A |

Table 2

| | | | Comparative Example 3 | Comparative Example 4 | Comparative Example 5 | Comparative Example 6 | Comparative Example 7 |
|---|---|---|---|---|---|---|---|
| First layer | | Proportion of UHMwPE (%) | 30 | 0 | 40 | 20 | 20 |
| | | Proportion of HDPE (%) | 70 | 50 | 60 | 70 | 50 |
| | | Proportion of low melting point PE (%) | - | 30 | - | 20 | 30 |
| | | Proportion of PP (%) | - | 20 | - | - | - |
| | | Resin concentration (%) | 28.5 | 25 | 25 | 25 | 25 |
| Second layer | | Proportion of UHMwPE (%) | - | - | - | - | 5 |
| | | Proportion of HDPE (%) | - | - | - | 50 | 70 |
| | | Proportion of low melting point PE (%) | - | - | - | - | - |
| | | Proportion of PP (%) | - | - | - | 50 | 30 |
| | | Resin concentration (%) | - | - | - | 30 | 30 |
| Layer composition ratio (skin/core/skin) | | | - | - | - | 1/2/1 | 1/2/1 |
| Kinds of low melting point PE | | | - | Ethylene-butene copolymer | - | Ethylene-1-hexene copolymer | Ethylene-butene copolymer |
| Density of low melting point PE (g/cm$^3$) | | | - | 0.951 | - | 0.931 | 0.951 |
| Low melting point PE m.p. (°C) | | | - | 124 | - | 123 | 124 |
| Ratio of first layer (%) | | | 100 | 100 | 100 | 90 | 80 |
| Proportion of PP in entire layer (%) | | | - | 20 | - | 6 | - |
| Proportion of low melting point PE in entire layers (%) | | | - | 30 | - | 14 | 20 |
| Gel sheet stretching temperature (°C) | | | 118 | 115 | 115 | 118 | 118 |
| Stretching ratio after drying (times) | | | 1 | 1 | 1.45 | 1.4 | 1.5 |
| Ratio during relaxation after stretching | | | 1 | 1 | 1.3 | 1.2 | 1.3 |

(continued)

| | | | | Comparative Example 3 | Comparative Example 4 | Comparative Example 5 | Comparative Example 6 | Comparative Example 7 |
|---|---|---|---|---|---|---|---|---|
| Evaluation and analysis | | Air permeability | Sec/100 cm$^3$ | 230 | 181 | 213 | 280 | 110 |
| | | Membrane thickness | $\mu$m | 12 | 9 | 9 | 9 | 9 |
| | | Porosity | % | 39 | 46 | 36 | 36 | 40 |
| | | Converted puncture strength (Converted at a thickness of 12 $\mu$m and porosity of 50%) | cN | 257 | 79 | 317 | 184 | 125 |
| | | 105°C 8 hr MD heat shrinkage ratio | % | 8.5 | 3.1 | 5.0 | 6.0 | 5.1 |
| | | 105°C 8 hr TD heat shrinkage ratio | % | 3.5 | 3.1 | 1.0 | 7.4 | 1.6 |
| | | 120°C 1 hr MD heat shrinkage ratio | % | 17.2 | 6.4 | 7.0 | 12.4 | 11.2 |
| | | 120°C 1 hr TD heat shrinkage ratio | % | 6.8 | 6.5 | 4.0 | 15.1 | 3.6 |
| | | Temperature rising air permeability SDT | °C | 135.3 | 128.6 | 135.1 | 128.3 | 129.1 |
| | | Temperature rising air permeability MDT | °C | 150.9 | 171.7 | 150.9 | 173.3 | 168.8 |
| | | Average flow pore diameter | nm | 24 | 35 | 35 | 34 | 38 |
| | | Maximum pore diameter | nm | 38 | 98 | 52 | 78 | 54 |
| Battery influence | | Optimization of coating | | | A | B | A | B | A |
| | | External short circuit resistance | | | B | A | B | A | A |
| | | Impact resistance | | | B | B | A | B | B |
| | | High-temperature heat resistance | | | B | A | B | A | A |
| | | Cycle characteristics | | | A | B | A | B | A |

As shown in Table 1, the polyolefin composite porous membranes in Examples 1 to 3 have a low shutdown temperature, a high meltdown temperature, and high converted puncture strength.

In contrast, the polyolefin composite porous membrane in Comparative Example 1, which does not contain low melting point polyethylene (low melting point PE), has a high shutdown temperature. The polyolefin composite porous membrane in Comparative Example 2, which does not contain polypropylene (PP), has a low meltdown temperature. The polyolefin composite porous membranes in Comparative Examples 3 and 5, which do not contain both low melting point polyethylene (low melting point PE) and polypropylene (PP), have a high shutdown temperature and a low meltdown temperature.

The polyolefin composite porous membrane in Comparative Example 4, which does not contain ultrahigh molecular weight polyethylene (UHMwPE), has a low converted puncture strength.

In the case (Comparative Examples 6 and 7) where the ultrahigh molecular weight polyethylene (UHMwPE) was contained in the first layer (surface layer) and was not contained or contained in a small amount in the second layer (core layer), the converted puncture strength is low.

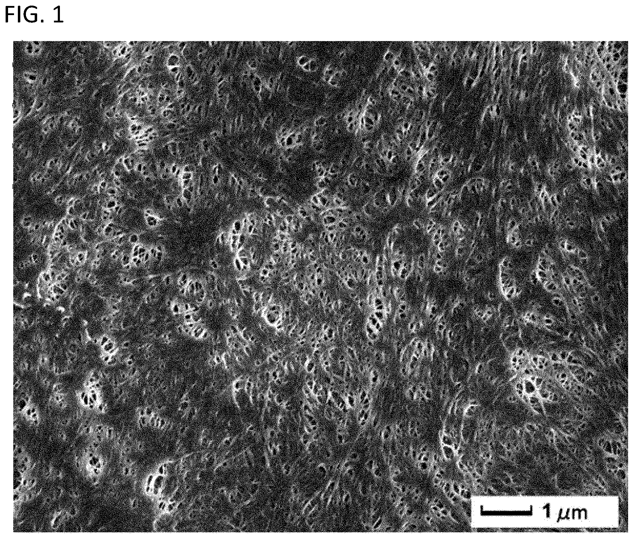

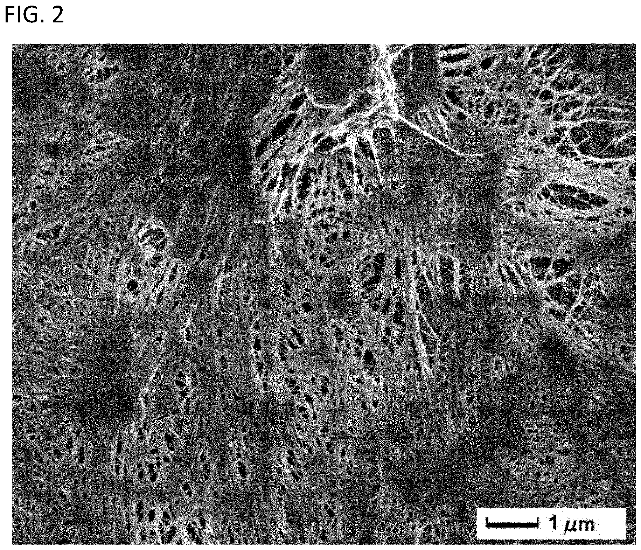

FIG. 1 shows a SEM image of the composite porous membrane in Example 1 in which the layers were laminated and stretched. FIG. 2 shows a SEM image of the single-layer porous membrane in Comparative Example 4 in which a single layer was stretched. As shown in FIG. 1, it is found that the first layer in the present invention is laminated with another layer (second layer) and the lamination is stretched to form a uniform fibril structure. However, in the case where a single layer is stretched, as shown in FIG. 2, it is found that a highly non-uniform porous membrane that includes parts that is not fibrillated is formed.

Industrial applicability

The present invention provides a polyolefin composite porous membrane, which can improve impact resistance in addition to battery characteristics such as external short circuit resistance and high-temperature heat resistance, a battery separator, and a battery using the battery separator.

Although the present invention is described in detail with reference to the specific embodiment, it will be apparent to those skilled in the art that various changes and modifications can be made without departing from the spirit and scope of the present invention.

The present application is based on a Japanese Patent Application No. 2017-215259 filed on November 8, 2017, the contents of which are incorporated herein by reference.

**Claims**

1.  A polyolefin composite porous membrane, comprising:

    a first layer containing a polypropylene (A), a first high-density polyethylene (B) having a melting point of 130°C or higher, and a second high-density polyethylene (C) having a melting point of 120°C or higher and lower than 130°C; and
    a second layer containing a polyethylene (D),
    wherein the first layer and the second layer are integrally laminated with each other.

2.  The polyolefin composite porous membrane according to claim 1, wherein the second layer contains an ultrahigh molecular weight polyethylene having a weight average molecular weight (Mw) of 1,000,000 or more as the polyethylene (D), and a content of the ultrahigh molecular weight polyethylene in the second layer is in a range of 2 mass% to 45 mass%.

3.  The polyolefin composite porous membrane according to claim 1 or 2, wherein a ratio of a thickness of the second layer to a thickness of the entire membrane is in a range of 60% to 95%.

4.  The polyolefin composite porous membrane according to any one of claims 1 to 3,
    wherein a content of the polypropylene (A) in the first layer is in a range of 5 mass% to 30 mass%,
    a content of the first high-density polyethylene (B) in the first layer is in a range of 30 mass% to 75 mass%, and
    a content of the second high-density polyethylene (C) in the first layer is in a range of 20 mass% to 45 mass%.

5.  The polyolefin composite porous membrane according to any one of claims 1 to 4, wherein the second high-density polyethylene (C) contains an ethylene-$\alpha$-olefin copolymer.

**6.** The polyolefin composite porous membrane according to any one of claims 1 to 5, wherein the second high-density polyethylene (C) contains an ethylene-butene copolymer.

**7.** The polyolefin composite porous membrane according to any one of claims 1 to 6, wherein the first layer is disposed on both sides of a surface layer, and the second layer is disposed between the first layers.

**8.** The polyolefin composite porous membrane according to any one of claims 1 to 7, having:

a shutdown temperature (SDT) of 120°C to 134°C;
a meltdown temperature (MDT) of 160°C or higher; and
a puncture strength converted at a thickness of 12 $\mu$m and a porosity of 50% being 270 cN or more.

**9.** The polyolefin composite porous membrane according to any one of claims 1 to 8, having:

a porosity of 30% or more,
an average flow pore diameter measured by a palm porometer being in a range of 20 nm to 40 nm, and
the maximum flow pore diameter measured by a palm porometer being 70 nm or less.

**10.** A polyolefin composite porous membrane, having:

a shutdown temperature (SDT) of 120°C to 134°C;
a meltdown temperature (MDT) of 160°C or higher: and
a puncture strength converted at a thickness of 12 $\mu$m and a porosity of 50% being 270 cN or more.

**11.** The polyolefin composite porous membrane according to claim 10, having:

a porosity of 30% or more;
an average flow pore diameter measured by a palm porometer being 20 nm to 40 nm; and
the maximum flow pore diameter measured by a palm porometer being 70 nm or less.

**12.** A battery separator using the polyolefin composite porous membrane according to any one of claims 1 to 11.

**13.** A battery comprising a positive electrode, a negative electrode, and the battery separator according to claim 12 disposed between the positive electrode and the negative electrode.

**14.** A method for producing a polyolefin composite porous membrane, comprising:

a step of laminating, in a molten state, a first solution which contains a solvent and a first resin material containing a polypropylene (A), a first high-density polyethylene (B) having a melting point of 130°C or higher, and a second high-density polyethylene (C) having a melting point of 120°C or higher and lower than 130°C, and a second solution which contains a solvent and a second resin material containing a polyethylene (D); and
a step of stretching the obtained laminated body to form a stretch formed product.

**15.** The method according to claim 14,
wherein a content of the polypropylene (A) in the first resin material is in a range of 5 mass% to 30 mass%,
a content of the first high-density polyethylene (B) in the first resin material is in a range of 30 mass% to 75 mass%,
a content of the second high-density polyethylene (C) in the first resin material is in a range of 20 mass% to 45 mass%, and
the second resin material contains an ultrahigh molecular weight polyethylene having a weight average molecular weight (Mw) of 1,000,000 or more as the polyethylene (D), and a content of the ultrahigh molecular weight polyethylene in the second resin material is in a range of 2 mass% to 45 mass%.

**16.** The method according to claim 14 or 15, wherein the second high-density polyethylene (C) contains an ethylene-$\alpha$-olefin copolymer.

**17.** The method according to any one of claims 14 to 16, wherein the second high-density polyethylene (C) contains an ethylene-butene copolymer.

FIG. 1

FIG. 2

<table>
<tr><td colspan="2" align="center">**INTERNATIONAL SEARCH REPORT**</td><td>International application No.<br>PCT/JP2018/040199</td></tr>
</table>

A.  CLASSIFICATION OF SUBJECT MATTER
Int.Cl.   B32B27/32(2006.01)i,    B32B5/18(2006.01)i,    C08J9/26(2006.01)i,
          H01M2/16(2006.01)i

According to International Patent Classification (IPC) or to both national classification and IPC

B.  FIELDS SEARCHED

Minimum documentation searched (classification system followed by classification symbols)
Int.Cl.   B32B27/32, B32B5/18, C08J9/26, H01M2/16

Documentation searched other than minimum documentation to the extent that such documents are included in the fields searched
Published examined utility model applications of Japan          1922-1996
Published unexamined utility model applications of Japan        1971-2019
Registered utility model specifications of Japan                1996-2019
Published registered utility model applications of Japan        1994-2019

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br><br>Y | JP 2012-521914 A (TORAY BATTERY SEPARATOR FILM CO., LTD.) 20 September 2012, claims 1, 4, 13, 17, 18, paragraphs [0018], [0021], [0028], [0029], [0081], [0082], [0091], table 1 & WO 2010/114671 A1, claims 1, 4, 13, 17, 18, paragraphs [0018], [0021], [0028], [0029], [0081], [0082], [0091], table 1 | 1-3, 5-7, 12-14, 16-17<br>4, 8-11, 15 |

☒  Further documents are listed in the continuation of Box C.          ☐  See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>24 January 2019 (24.01.2019) | Date of mailing of the international search report<br>05 February 2019 (05.02.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

| International application No. |
|---|
| PCT/JP2018/040199 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-537845 A (TONEN CHEMICAL CORPORATION) 09 December 2010, claims 1, 2, 6, paragraph [0181], table 1 to paragraph [0185], table 2 & WO 2009/028734 A1, claims 1, 2, 6, paragraph [0345], table 1 to paragraph [0355], table 2 & EP 2188127 A1 & KR 10-2010-0059933 A & CN 101795866 A & PL 2188127 T | 4, 8-11, 15 |
| Y | WO 2015/194667 A1 (TORAY BATTERY SEPARATOR FILM CO., LTD.) 23 December 2015, claims 4, 5, paragraphs [0059], [0060], [0107] & US 2017/0125766 A1, claims 4, 5, paragraphs [0080]-[0085], [0150]-[0151] & EP 3159163 A1 & KR 10-2017-0019348 A & CN 107405902 A | 9, 11 |
| A | WO 2015/190264 A1 (TORAY BATTERY SEPARATOR FILM CO., LTD.) 17 December 2015, entire text & CN 106463679 A & KR 10-2017-0016827 A | 1-17 |
| A | JP 2012-89346 A (TEIJIN LTD.) 10 May 2012, entire text (Family: none) | 1-17 |
| A | WO 2014/065331 A1 (PRIME POLYMER CO., LTD.) 01 May 2014, claims, paragraphs [0003], [0004] & US 2015/0274908 A1, claims, paragraphs [0003], [0004] & EP 2913350 A1 & CN 104736576 A & KR 10-2015-0079621 A & TW 201422700 A | 1-17 |
| A | JP 2012-522354 A (TORAY BATTERY SEPARATOR FILM CO., LTD.) 20 September 2012, claims & WO 2010/114673 A1, claims | 1-17 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015194667 A1
- JP 4931163 B
- JP 4280371 B
- JP 5202949 B
- JP 4641706 B
- JP 5046640 B
- JP 2132327 A
- JP 3347835 B
- WO 2006137540 A1
- JP 3347854 B
- JP 2002256099 A
- JP 2017215259 A